# FASCICULE DE BREVET EUROPEEN

(11) **EP 2 218 978 B1**
(45) Date de publication et mention de la délivrance du brevet: **13.04.2011**
(21) Numéro de dépôt: 09153046.9
(22) Date de dépôt: 17.02.2009
(51) Int. Cl.: F24J 2/07, F22B 1/00

(54) **Echangeur de chaleur en drapeau.**
Fahnenwärmetauscher
Flag heat exchanger

(43) Date de publication de la demande: 18.08.2010
(73) Titulaire: Cockerill Maintenance & Ingéniérie, 4100 Seraing (BE); Abengoa Solar New Technologies, S.A., 41018 Sevilla (ES)
(72) Inventeur: DETHIER, Alfred, B-4140, SPRIMONT (BE); García Ramirez, Elena, 41018 Sevilla (ES)
(74) Mandataire: pronovem

(56) Documents cités:
- EP-A- 0 106 687
- DE-A1- 2 144 558
- FR-A- 2 431 101
- US-A- 4 665 700

## Description

### Objet de l'invention

La présente invention se rapporte à un échangeur de chaleur spécialement adapté pour un générateur de vapeur incorporé dans une centrale à énergie solaire. En particulier, l'invention se rapporte à un échangeur de chaleur associé à un surchauffeur de vapeur.

### Arrière-plan technologique et état de la technique

Dans le cadre de l'intérêt actuel pour les sources d'énergie renouvelable permettant une forte réduction des émissions de CO₂, on a notamment développé des centrales solaires à concentration thermodynamique. Dans ce type de centrale, le rayonnement solaire est réfléchi par une série de miroirs concentrant celui-ci en une zone réduite définie, afin de chauffer un fluide caloporteur. En particulier, dans cette zone est installée une chaudière produisant de la vapeur à haute pression et haute température. Cette vapeur est alors destinée à alimenter une turbine à vapeur afin de produire de l'électricité.

On connaît plusieurs types de centrales solaires à concentration : les centrales à tour, les centrales à capteurs cylindro-paraboliques et les centrales à capteurs paraboliques.

En particulier, les centrales à tour déjà existantes ou en projet permettent d'obtenir de grandes puissances (entre 10 et 500 MW). Elles sont constituées d'un champ de capteurs solaires appelés héliostats permettant de chauffer de l'air ou un autre fluide caloporteur à des températures de plus de 1200°C.

Des exemples de ces centrales solaires peuvent être trouvés notamment dans les documents suivants : DE 102 46 721 A, DE 102 48 068 B, EP-A-106 687, EP-A-106 688, FR-A-2 438 804, WO-A-2008/12390, etc.

### Descriptif succinct d'une chaudière

Dans le contexte de la centrale solaire à concentration, la chaudière comprend des évaporateurs transformant l'eau en vapeur saturée et des surchauffeurs amenant la température de vapeur au niveau souhaité. Les évaporateurs travaillent en circulation naturelle avec un ballon permettant la séparation eau/vapeur. Tous les échangeurs de chaleur captent l'énergie solaire par rayonnement pur. Il n'y a donc aucun échange convectif.

Le flux de rayonnement incident sur les échangeurs (exprimé en kW/m²) est l'élément déterminant dans le calcul des échangeurs et de la taille de ceux-ci, compte tenu de la puissance totale souhaitée.

Le calcul du flux thermique maximum admissible est basé sur la température de métal admissible et sur le calcul d'échange thermique à travers le tube vers le fluide caloporteur.

Ainsi, dans le cas des évaporateurs, une notion d'écoulement interne d'un fluide biphasique intervient dans la limitation du flux thermique maximum admissible (flux de chaleur critique caractérisé par la fin du régime d'ébullition nucléée ou DNB, pour *Departure from Nucleated Boiling,* disparition du liquide ou *Dryout*).

### Effets de dilatation différentielle

Au vu des hautes pressions de fluide rencontrées (par exemple 120 bars), les échangeurs sont obligatoirement constitués de tubes, seuls capables de tenir cette pression. Les tubes exposés de face au rayonnement solaire concentré sont chauffés d'un côté alors que leur dos ne reçoit aucun flux thermique. Il s'ensuit une différence de température entre la face avant du tube exposé au rayonnement et la face arrière de celui-ci, ne recevant pas de rayonnement.

Dans le cas d'un évaporateur (contenant donc un fluide biphasique), l'excellent coefficient d'échange interne des tubes entre le mélange biphasique et le métal du tube contribue à uniformiser les températures de face et de dos.

Par contre, dans le cas d'un surchauffeur (contenant donc de la vapeur sèche), le coefficient d'échange interne entre la vapeur et le métal est bien moindre et la différence de température entre la face avant et la face arrière du tube peut atteindre des valeurs très importantes. Il en résulte un effet « bilame » qui contraindra le tube à prendre une forme en arc.

Si le tube est maintenu droit par des moyens mécaniques, la courbure naturelle empêchée par ce fait se transforme en contrainte dans le métal : l'avant du tube sera en compression alors que l'arrière du tube sera en traction.

Ce phénomène limite très fortement le flux thermique admissible dans le cas d'une construction bridée.

Le document EP-A-0 106 687 décrit un panneau incorporant des tubes de génération de vapeur (évaporateur) et des tubes de surchauffeur. Les tubes d'évaporateur sont espacés de manière à offrir au rayonnement incident un intervalle de passage entre deux tubes adjacents. Entre deux tubes d'évaporateur adjacents se trouve, à l'arrière de ceux-ci, un tube de surchauffeur, qui reçoit ainsi une partie du rayonnement incident.

En d'autres termes, les tubes de l'évaporateur de chaleur et les tubes du surchauffeur sont disposés en « quinconce » par rapport au flux solaire incident, ce qui permet de répartir le flux de chaleur entre les deux échangeurs. Les tubes de surchauffeur sont coincés entre un support et les tubes de l'évaporateur qui sont attachés par des éléments de liaison à ce support. Cette configuration permet d'éviter de coûteux éléments de support anti-vibration pour les tubes d'évaporateur. Chaque tube d'évaporateur est attaché en plusieurs points sur sa longueur. Par conséquent, même s'ils peuvent se dilater longitudinalement, les tubes de surchauffeur sont aussi maintenus droits mécaniquement sur toute leur longueur, ce qui implique les contraintes mentionnées ci-dessus. De plus, le flux incident sur les tubes de surchauffeur est limité par construction.

### Buts de l'invention

La présente invention vise à fournir une solution qui ne présente pas les inconvénients de l'état de la technique.

En particulier, l'invention a pour but la conception d'un échangeur de chaleur, en particulier de type surchauffeur, destiné à contenir de la vapeur sèche, dans le cas d'une chaudière associée à une centrale solaire à condensation, ledit échangeur de chaleur ne présentant pas de contraintes mécaniques dues à l'effet de dilatation différentielle dans les tubes de l'échangeur.

### Principaux éléments caractéristiques de l'invention

Un premier objet de la présente invention se rapporte à un dispositif d'échange de chaleur configuré pour capter de l'énergie par rayonnement, comportant au moins un échangeur élémentaire en forme de drapeau conforme à la revendication 1.

Selon des modalités d'exécution particulières de l'invention, le dispositif d'échange de chaleur précité comprend en outre, en combinaison, une ou plusieurs des caractéristiques suivantes :
- la tête d'épingle comporte une boucle située par construction dans un plan incliné et possédant un rayon de cintrage choisi de manière appropriée afin de limiter la perte de charge ;
- le dispositif comporte une pluralité d'échangeurs-drapeaux agencés de manière telle qu'un drapeau d'un échangeur donné occulte les collecteurs d'un échangeur adjacent ;
- les tubes d'échange sont agencés de manière à présenter chacun deux parties recourbées en épingle à cheveux opposées, de sorte que les collecteurs sont disposés entre ces deux parties recourbées et que les tubes d'échange sont en porte-à-faux de part et d'autre des collecteurs et configurés pour que les collecteurs soient occultés par les drapeaux respectivement formés ;
- un cache central en céramique est pourvu pour occulter complètement, par rapport au rayonnement incident, des éléments se trouvant à l'arrière du dispositif ;
- l'énergie captée par rayonnement est l'énergie solaire ;
- ledit dispositif est un surchauffeur pour un générateur de vapeur.

Un second objet de la présente invention se rapport à une centrale solaire à concentration thermodynamique comprenant une chaudière munie d'un dispositif d'échange de chaleur tel que décrit ci-dessus.

### Brève description des figures

La figure 1 représente une vue en plan d'une première forme d'exécution d'un tube d'échangeur selon la présente invention, présentant une forme en épingle et connecté respectivement au collecteur d'entrée et au collecteur de sortie.

La figure 2 représente une vue en élévation du tube selon la figure 1.

La figure 3 représente une vue en perspective du tube selon la figure 1.

La figure 4 représente une autre vue en élévation du tube selon la figure 1.

Les figures 5 et 6 représentent respectivement une vue en élévation et une vue en perspective d'une première forme d'exécution de l'échangeur selon la présente invention.

La figure 7 représente une vue en plan d'une seconde forme d'exécution d'un tube d'échangeur selon la présente invention, connecté respectivement au collecteur d'entrée et au collecteur de sortie.

La figure 8 représente une vue en perspective du tube selon la figure 7.

La figure 9 représente une vue en perspective d'une seconde forme d'exécution de l'échangeur selon la présente invention.

### Description de formes d'exécution préférées de l'invention

La solution proposée au problème technique précité est, selon l'invention, la conception d'un échangeur en forme de drapeau.

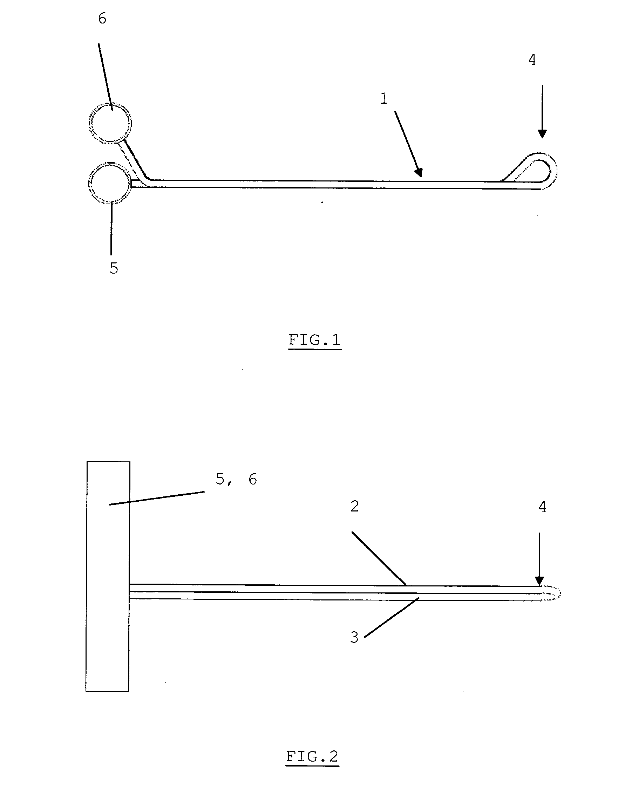

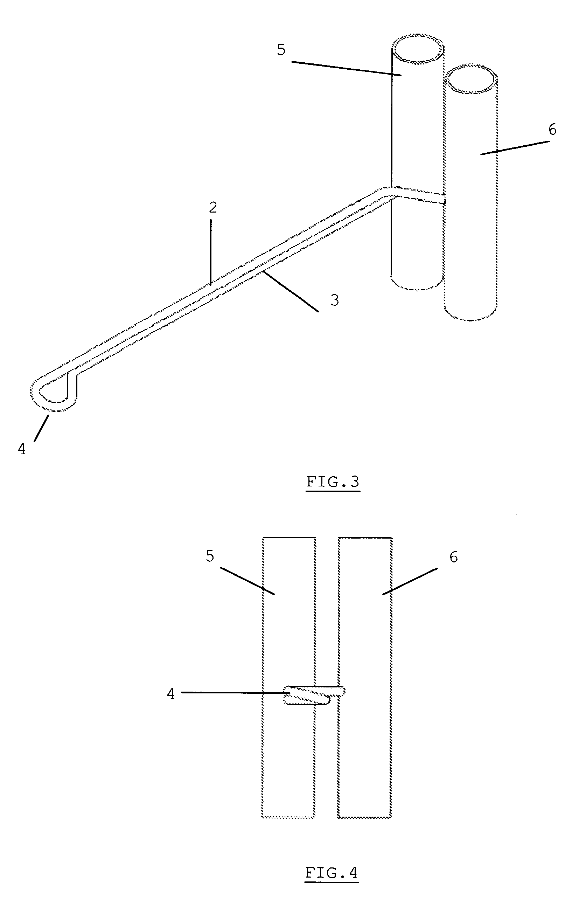

Selon une première modalité de réalisation, chaque tube 1 de l'échangeur 10 est arrangé en épingle à cheveux simple dont les deux branches 2, 3 sont superposées verticalement (figures 1 à 4).

La tête d'épingle comporte une boucle 4 située dès lors par construction dans un plan incliné et son rayon de cintrage est choisi de manière appropriée afin de limiter la perte de charge du côté vapeur.

Les extrémités des tubes 1 sont alors connectées, par exemple soudées, respectivement à chaque collecteur d'entrée 5 et de sortie 6.

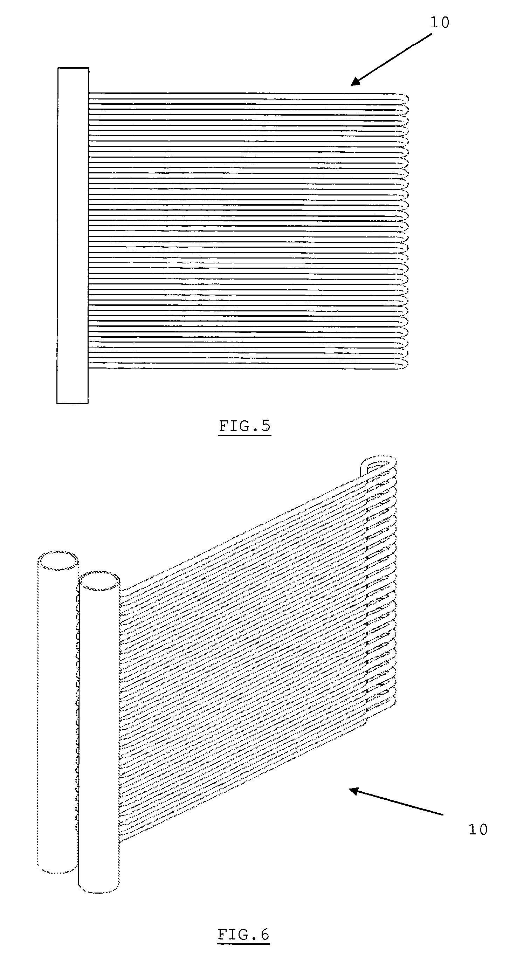

La superposition d'épingles constitue ainsi l'échangeur 10, qui a la forme d'un drapeau. Selon l'invention, les tubes jointifs 2, 3 arrêtant les rayons lumineux du concentrateur solaire (figures 5 et 6).

Les tubes 1 sont chacun auto-supportés et sont libres de leur propre dilatation thermique, avec un effet « bilame » ainsi libéré. Aucune contrainte ne résulte plus des effets thermiques sur les tubes, contrairement à la situation dans l'état de la technique.

Un échangeur complet peut être composé de plusieurs échangeurs-drapeaux arrangés de telle manière qu'un drapeau donné occulte les collecteurs d'un autre échangeur afin d'éviter toute incidence de rayonnement sur les collecteurs et donc toute contrainte thermique dans ceux-ci.

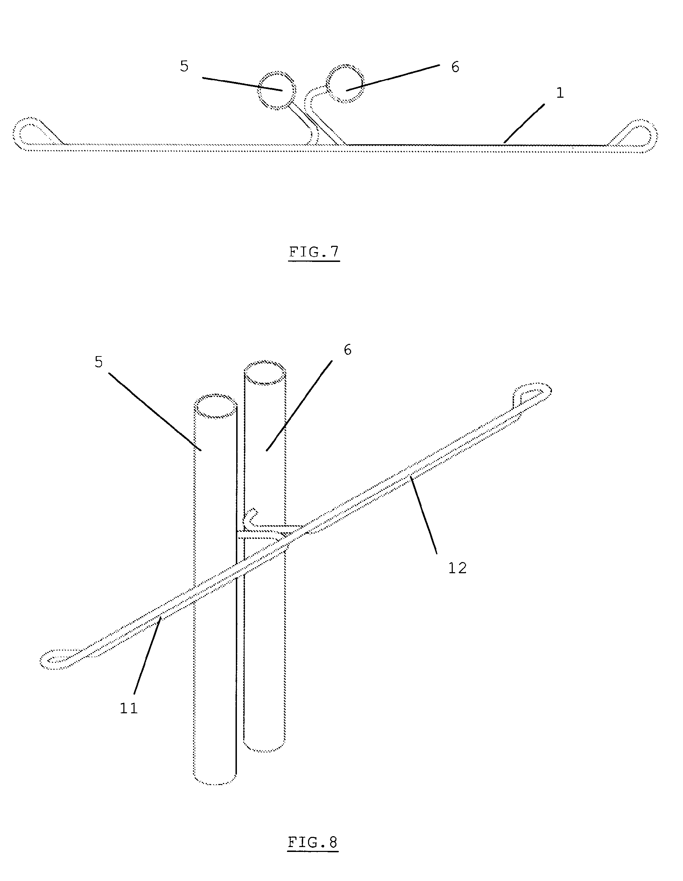

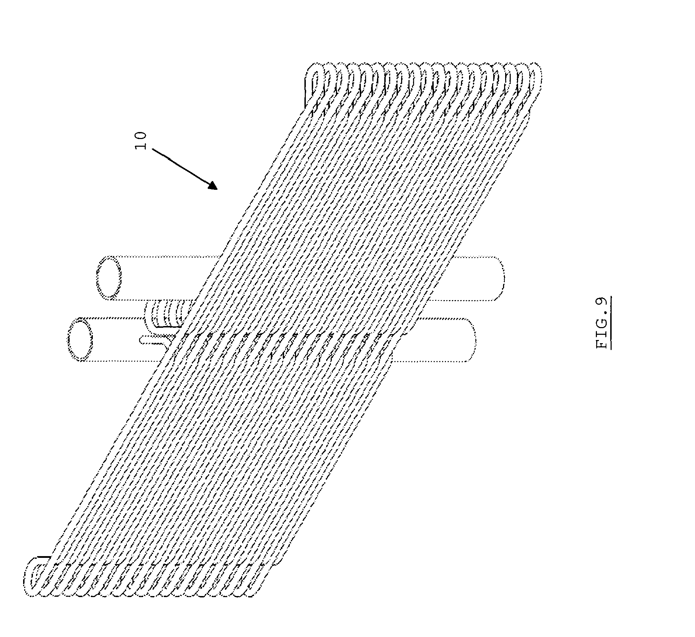

Une forme équivalente, faisant l'objet d'une seconde modalité de l'invention, consiste à installer les collecteurs 5, 6 au milieu de la « boucle », les tubes 1 étant alors en porte-à-faux de part et d'autre des collecteurs 5, 6 (figures 7 à 9). Dans ce cas, une petite zone au centre n'est pas totalement masquée par les tubes 1 et un cache en céramique assurera avantageusement l'occultation complète du panneau 10 (non représenté).

Le problème technique résolu par l'invention est d'éliminer, en particulier dans les surchauffeurs (contenant de la vapeur sèche uniquement), les contraintes dues à la dilatation différentielle de type « bilame », lorsque les tubes sont maintenus droits par des bridages mécaniques. Les extrémités en épingle à cheveux sont ainsi libres de se dilater.

Le document antérieur EP-A-0 106 687 ne divulgue pas l'échangeur en drapeau selon l'invention et ses tubes de surchauffeur auto-supportés et en forme d'épingle à cheveux. Plus en détail, tant les tubes d'évaporateur que de surchauffeur ne sont pas recourbés en épingle à cheveux et donc pas auto-supportés avec une extrémité libre de se dilater. Ils sont rectilignes, parallèles entre eux et toujours maintenus droits mécaniquement sur toute leur longueur, entre les collecteurs communs d'entrée et sortie.

## Revendications

1. Dispositif d'échange de chaleur configuré pour capter de l'énergie par rayonnement, comportant au moins un échangeur élémentaire comprenant :
a) un collecteur d'entrée (5) et un collecteur de sortie (6) ;
b) une pluralité de tubes d'échange (1) connectés respectivement au collecteur d'entrée (5) et au collecteur de sortie (6);
**caractérisé en ce que** ledit au moins un échangeur élémentaire est en forme de drapeau (10), lesdits tubes d'échanges (1) étant superposés pour arrêter le rayonnement incident, chaque tube (1) se présentant sous la forme d'une épingle à cheveux avec une partie recourbée en tête d'épingle (4) et deux branches jointives (2, 3) superposées verticalement sur la plus grande partie de leur longueur, l'extrémité des tubes (1) au niveau de la tête d'épingle (4) étant libre et les tubes (1) étant auto-supportés à leurs extrémités connectées auxdits collecteurs (5, 6).

2. Dispositif d'échange de chaleur selon la revendication 1, **caractérisé en ce que** la tête d'épingle (4) comporte une boucle située par construction dans un plan incliné et possédant un rayon de cintrage choisi de manière appropriée afin de limiter la perte de charge.

3. Dispositif d'échange de chaleur selon la revendication 1, **caractérisé en ce que** le dispositif comporte une pluralité d'échangeurs-drapeaux (10) agencés de manière telle qu'un drapeau d'un échangeur donné occulte les collecteurs (5, 6) d'un échangeur adjacent.

4. Dispositif d'échange de chaleur selon la revendication 1, **caractérisé en ce que** les tubes d'échange (1) sont agencés de manière à présenter chacun deux parties recourbées en épingle à cheveux opposées (11, 12), de sorte que les collecteurs (5, 6) sont disposés entre ces deux parties recourbées et que les tubes d'échange (1) sont en porte-à-faux de part et d'autre des collecteurs (5, 6) et configurés pour que les collecteurs (5, 6) soient occultés par les drapeaux respectivement formés.

5. Dispositif d'échange de chaleur selon la revendication 4, **caractérisé en ce qu'**un cache central en céramique est pourvu pour occulter complètement, par rapport au rayonnement incident, des éléments se trouvant à l'arrière du dispositif.

6. Dispositif selon la revendication 1, **caractérisée en ce que** l'énergie captée par rayonnement est l'énergie solaire.

7. Dispositif d'échange de chaleur selon la revendication 1, **caractérisé en ce que** ledit dispositif est un surchauffeur pour un générateur de vapeur.

8. Centrale solaire à concentration thermodynamique comprenant une chaudière munie d'un dispositif d'échange de chaleur selon la revendication 1.

## Claims

1. A heat-exchange device configured so as to capture energy by radiation, with at least one elementary exchanger comprising:
a) an inlet collector (5) and an outlet collector (6);
b) a plurality of exchange tubes (1) connected to the inlet collector (5) and to the outlet collector (6), respectively;
**characterized in that** said at least one elementary exchanger is flag-shaped (10), said exchange tubes (1) being superposed in order to stop the incident radiation, each tube (1) being in the form of a hairpin with a curved pin-head portion (4) and two joined branches (2,3) vertically superposed on the largest portion of their length, the end of the tubes (1) at the level of the pinhead (4) being free and the tubes (1) being self-supported at their ends connected to said collectors (5,6).

2. The heat-exchange device according to Claim 1, **characterized in that** the pin head (4) comprises a loop located by design in a tilted plane and having a bending radius that is suitably selected in order to limit the pressure loss.

3. The heat-exchange device according to Claim 1, **characterized in that** the device comprises a plurality of flag-exchangers (10) arranged so that a flag of a given exchanger occults the collectors (5,6) of an adjacent exchanger.

4. The heat-exchange device according to Claim 1, **characterized in that** the exchange tubes (1) are arranged in such a way that each have two opposite curved pin-head portions (11,12) so that the collectors (5,6) are positioned between both of these curved portions and so that the exchange tubes (1) are cantilevered on either side of the collectors (5,6) and configured so that the collectors (5,6) are occulted by the flags respectively formed.

5. The heat-exchange device according to Claim 4, **characterized in that** a central ceramic cover is provided for completely occulting, relative to the incident radiation, elements found at the rear of the device.

6. The device according to Claim 1, **characterized in that** the energy captured by radiation is solar energy.

7. The heat-exchange device according to Claim 1, **characterized in that** said device is an overheater for a steam generator.

8. A solar power plant with thermodynamic concentration comprising a boiler provided with a heat-exchange device according to Claim 1.

## Patentansprüche

1. Wärmetauschvorrichtung, die konfiguriert ist, um Strahlungsenergie einzufangen, die mindestens einen elementaren Austauscher aufweist, der umfasst:
a) einen Eingangskollektor (5) und einen Ausgangskollektor (6),
b) eine Vielzahl von Austauschrohren (1), die jeweils mit dem Eingangskollektor (5) und mit dem Ausgangskollektor (6) verbunden sind, **dadurch gekennzeichnet, dass** mindestens ein elementarer Austauscher in Fahnenform (10) ist, wobei die Austauschrohre (1) übereinander liegen, um die einfallende Strahlung aufzuhalten, wobei sich jedes Rohr (1) in Haarnadelform mit einem am Nadelkopf (4) gebogenen Abschnitt und zwei über dem größten Abschnitt ihrer Länge nebeneinander liegenden vertikal übereinander liegenden Armen (2, 3) präsentiert, wobei das Ende der Rohre (1) auf Ebene des Nadelkopfes (4) frei ist und die Rohre (1) an ihren mit den Kollektoren verbundenen Enden (5, 6) selbsttragend sind.

2. Wärmetauschvorrichtung nach Anspruch 1, **dadurch gekennzeichnet, dass** der Nadelkopf (4) eine Schleife umfasst, die sich konstruktionsbedingt in einer geneigten Ebene befindet und einen Biegeradius besitzt, der entsprechend ausgewählt wurde, um den Lastverlust zu mindern.

3. Wärmetauschvorrichtung nach Anspruch 1, **dadurch gekennzeichnet, dass** die Vorrichtung eine Vielzahl fahnenförmiger Austauscher (10) umfasst, die derart ausgebildet sind, dass eine Fahne eines gegebenen Austauschers die Kollektoren (5, 6) eines benachbarten Austauschers verdeckt.

4. Wärmetauschvorrichtung nach Anspruch 1, **dadurch gekennzeichnet, dass** die Austauschrohre (1) derart ausgebildet sind, dass jedes Rohr zwei gegenüberliegende haarnadelförmig gebogene Abschnitte (11, 12) aufweist, so dass die Kollektoren (5, 6) zwischen diesen zwei gebogenen Abschnitten angeordnet sind und die Austauschrohre (1) auf der einen und der anderen Seite der Kollektoren (5, 6) hervorstehen und konfiguriert sind, damit die Kollektoren von den jeweils gebildeten Fahnen verdeckt sind.

5. Wärmetauschvorrichtung nach Anspruch 4, **dadurch gekennzeichnet, dass** im Verhältnis zur einfallenden Strahlung eine zentrale Abdeckung aus Keramik vorgesehen ist, um Elemente komplett abzudecken, die sich hinter der Vorrichtung befinden.

6. Vorrichtung nach Anspruch 1, **dadurch gekennzeichnet, dass** die durch Strahlung aufgefangene Energie die Sonnenenergie ist.

7. Wärmetauschvorrichtung nach Anspruch 1, **dadurch gekennzeichnet, dass** die Vorrichtung ein Überhitzer für einen Dampferzeuger ist.

8. Sonnenkraftwerk mit thermodynamischer Konzentration, das einen Kessel umfasst, der mit einer Wärmetauschvorrichtung nach Anspruch 1 ausgestattet ist.
